# EUROPÄISCHE PATENTSCHRIFT

(11) **EP 1 281 582 B1**
(45) Veröffentlichungstag und Bekanntmachung des Hinweises auf die Patenterteilung: **28.09.2005**
(21) Anmeldenummer: 02015998.4
(22) Anmeldetag: 18.07.2002
(51) Int. Cl.: B60R 19/48, B60R 21/01

(54) **Sensoreinrichtung für Fahrzeuge**
Sensor device for vehicles
Capteur pour véhicules

(30) Priorität: 31.07.2001 DE 10137250
(43) Veröffentlichungstag der Anmeldung: 05.02.2003
(73) Patentinhaber: Bayerische Motoren Werke Aktiengesellschaft, 80809 München (DE)
(72) Erfinder: Hewerer, Jens, Dr., 85757 Karlsfeld (DE); Otubushin, Abayomi, Dr., 80805 München (DE)

(56) Entgegenhaltungen:
- EP-A- 0 937 612
- WO-A-00/32449
- DE-A- 1 944 289
- DE-A- 19 532 620
- US-A- 5 441 301

## Beschreibung

Die Erfindung betrifft eine Sensoreinrichtung für Fahrzeuge, mit den im Oberbegriff des Patentanspruches 1 angegebenen Merkmalen.

Eine derartige Sensoreinrichtung ist in der WO 97/18108 an eine Personen-Schutzeinrichtung eines Kraftfahrzeugs angeschlossen, mit der bei einem Zusammenprall eines Fußgängers mit dem Kraftfahrzeug eine Verletzung des Fußgängers verhindert werden soll. Die Sensoreinrichtung erfordert einen Sensor in der vorderen Stoßstange, einen weiteren Sensor am vorderen Rand der Motorhaube und einen dritten Sensor zentral an der Motorhaube. Eine Auswertung der zueinander zeitverzögerten Signale der drei Sensoren soll eine Unterscheidung ermöglichen, ob das Kraftfahrzeug mit einem anderen Fahrzeug oder mit einem Fußgänger zusammenprallt. Zu den Sensoren ist lediglich angegeben, dass diese von optischen Fasern gebildet oder durch andere Sensoren ersetzt sein können.

Dokument EP 0937612 A2 offenbart eine Sensoreinrichtung nach dem Oberbegriff des Anspruchs 1.

Der Erfindung liegt die Aufgabe zu Grunde, eine Sensoreinrichtung für Fahrzeuge mit den Merkmalen im Oberbegriff des Patentanspruches 1 anzugeben, die in einfacher Weise einen unfallbedingten Aufprall einer Person oder eines anderen Fahrzeugs auf das Fahrzeug erfassen kann, dabei in der Funktion nicht oder kaum beeinträchtigt wird und von Umwelteinflüssen weitgehend unabhängig ist.

Diese Aufgabe ist durch die im Patentanspruch 1 angegebenen Merkmale gelöst. Vorteilhafte Ausgestaltungen der Erfindung sind den Unteransprüchen entnehmbar.

Der Sensor weist einen elastisch verformbaren Schlauch auf, der in einfacher Weise nach außen offen oder geschlossen gefertigt und montiert werden kann. Der Schlauch ist bevorzugt nach außen geschlossen ausgebildet und kann in seinem Innenraum ein beliebiges, vorzugsweise gasförmiges Medium aufnehmen. Bei einem nach außen vollständig oder weitgehend geschlossenen Schlauch ergeben sich bei einer unfallbedingten Belastung größere Druckänderungen. Ein nach außen offener Schlauch steht vorzugsweise mit der Umgebungsluft in Verbindung und ist zur Erhaltung einer gewünschten Form in der Einbaulage mit einer ausreichenden Eigenstabilität gefertigt, wofür lediglich ein geeignetes Material zu wählen und eine Mindestdicke des Schlauches festzulegen sind. Steht der Innenraum des Schlauches über eine Öffnung mit der Umgebungsluft in Verbindung, so darf die Öffnung lediglich eine solche Größe aufweisen, dass bei einer unfallbedingten elastischen Verformung des Schlauches die Luft aus dem Schlauchinnenraum lediglich gedrosselt durch die Öffnung abströmen kann, wodurch sich bei der unfallbedingten Verformung des Schlauches der Druck im Schlauchinnenraum erhöht, der dann von dem Drucksensor erfasst wird. Bei Verwendung der Sensoreinrichtung an einem Kraftfahrzeug sind vorzugsweise mehrere längliche Schläuche beispielsweise hinter der äußeren Verkleidung einer vorderen Stoßstange angeordnet, die an einer zum Drucksensor abzweigenden Verbindungsstelle sternförmig verbunden sind und sich von der beispielsweise in Stoßstangenmitte befindlichen Verbindungsstelle etwa parallel zu den Seitenbereichen der Stoßstange erstrecken. Eine besonders zuverlässige Erfassung eines Aufpralls beispielsweise einer Person auf das Fahrzeug wird erreicht, wenn die an den Drucksensor angeschlossene Schalt- und/oder Auswerteeinrichtung die Druckänderung im Schlauchinnenraum pro Zeiteinheit auswertet und beispielsweise den Umgebungsluftdruck als Referenzwert nimmt, da dadurch in einfacher Weise ausgeschlossen werden kann, dass beispielsweise durch Sonneneinstrahlung hervorgerufene Druckänderungen im Schlauchinnenraum selbsttätige Schutzmaßnahmen im Aufprallbereich bewirken. Eine Fehlauslösung kann auch verhindert werden, wenn die Geschwindigkeit des Fahrzeugs erfasst wird und eine Aktivierung der Schutzmaßnahmen nur bei Fahrgeschwindigkeiten erfolgt, die in einem vorgegebenen Geschwindigkeitsbereich sind. Wird dagegen ein Aufprall einer Person oder eines anderen Fahrzeugs erkannt, so können die Schutzmaßnahmen beispielsweise das Füllen von Airbags und/oder Anheben einer Motorhaube vorsehen, die über elastische Federn abgestützt sein kann, die einen Aufprall ebenfalls dämpfen. Die Sensoreinrichtung wird bei einem Aufprall einer Person oder eines Fahrzeugs nicht oder kaum beschädigt und bleibt dadurch funktionsfähig. Reparaturmaßnahmen sind nicht oder selten erforderlich.

Ein Ausführungsbeispiel der Erfindung wird anhand einer Zeichnung näher erläutert. Es zeigen
- Fig. 1: eine Vorderansicht von dem mit der Sensoreinrichtung an der vorderen Stoßstange ausgestatteten Kraftfahrzeug,
- Fig. 2: die Sensoreinrichtung an der vorderen Stoßstange separat und
- Fig. 3: eine geschnittene Draufsicht auf die vordere Stoßstange und die Sensoreinrichtung.

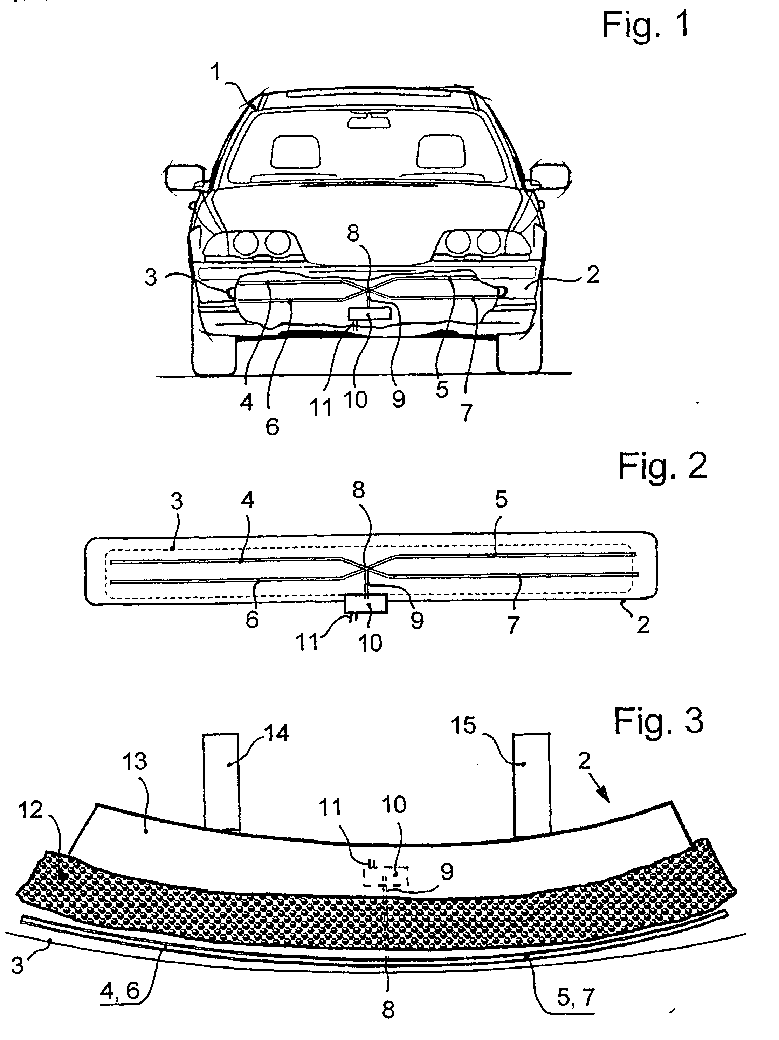

Das in Figur 1 dargestellte Kraftfahrzeug 1 weist an der vorderen Stoßstange 2 eine Sensoreinrichtung auf, die mit einer nicht dargestellten Schalt- und/oder Auslöseeinrichtung verbunden ist, die bei einem unfallbedingten Zusammenstoß des Kraftfahrzeugs mit einem Fußgänger oder einem anderen Fahrzeug von der Sensoreinrichtung aktiviert selbsttätig Maßnahmen wie das Füllen von Airbags bzw. Anheben der Motorhaube im Aufprallbereich ergreift, die Unfallschäden vermeiden oder zumindest weitgehend abschwächen sollen.

In Figur 2 ist die Sensoreinrichtung an der vorderen Stoßstange 2 separat in einer Ansicht von vorne dargestellt, in der erkennbar ist, dass die Sensoreinrichtung hinter einer äußeren, durch eine unterbrochene Umrisslinie angedeuteten Verkleidung 3 der vorderen Stoßstange 2 vier Schläuche 4, 5, 6, 7 aufweist, deren Schlauchinnenräume in einem mittleren Verbindungselement 8 sternförmig verbunden sind, das über ein Schlauchstück 9 mit einem Drucksensor 10 in Verbindung steht. Jeweils zwei Schläuche 4, 5 und 6, 7 erstrecken sich von dem etwa in der Mitte der Stoßstange 2 befindlichen Verbindungselement 8 Paarweise etwa parallel zu den Seitenbereichen der Stoßstange 2. Die Schläuche 4, 5, 6, 7 sind an den seitlich äußeren Stirnseiten geschlossen ausgebildet und in den Schlauchinnenräumen wirkt etwa der Umgebungsluftdruck bzw. der Luftdruck der Umgebung, als die Sensoreinrichtung montiert wurde. Durch den Anschluss 11 am Drucksensor 10 ist angedeutet, dass der Drucksensor 10 den jeweiligen Umgebungsluftdruck als Referenzwert erfasst. Die an den Drucksensor 10 angeschlossene, nicht dargestellte Schalt-und/oder Auswerteeinrichtung wertet die Druckänderungen in den Schlauchinnenräumen pro Zeiteinheit aus und verwendet den Umgebungsluftdruck als Referenzwert. Die Auswertung der Messergebnisse erfolgt derart, dass die durch Sonneneinstrahlung oder andere Umgebungseinflüsse hervorgerufenen Druckänderungen in den Schlauchinnenräumen keine selbsttätigen Schutzmaßnahmen wie das Füllen von Airbags oder Anheben der Motorhaube im Aufprallbereich bewirken, die bei einem Zusammenprall mit einem Fußgänger oder mit einem anderen Fahrzeug als Schutz für den Fußgänger bzw. die kollidierenden Fahrzeuge vorgesehen sind.

In der geschnittenen Draufsicht auf die vordere Stoßstange 2 des Kraftfahrzeugs gemäß Fig. 3 ist erkennbar, dass die beispielsweise aus Silikon mit etwa gleichen Längen gefertigten Schläuche 4, 5, 6 und 7 zwischen der vorderen Verkleidung 3 der vorderen Stoßstange 2 und einem dahinter befindlichen Schaumblock 12 angeordnet sind, der sich auf dem Stoßstangengrundträger 13 befindet, der beispielsweise aus Aluminium gefertigt ist. Der Drucksensor 10 ist geschützt hinter dem Schaumblock 12 angeordnet und über das Schlauchstück 9 mit dem Verbindungselement 8 verbunden, in dem die Schlauchinnenräume sternartig in Verbindung stehen. Der Stoßstangengrundträger 13 ist an zwei seitlich nebeneinander in Fahrzeuglängsrichtung verlaufenden Längsträgern 14, 15 der Fahrzeugkarosserie befestigt bzw. abgestützt. Bei einem Unfall kann die äußere Verkleidung 9 beispielsweise aus Kunststoff derart verformt werden, dass sich auch wenigstens einer der Schläuche 4, 5, 6, und 7 verformt, wodurch der Druck im betreffenden Schlauchinnenraum ansteigt. Die Schnelligkeit und Größe des Druckanstiegs in einem Schlauch bzw. in mehreren Schläuchen kann derart ausgewertet werden, dass erkennbar ist, ob eine Person oder ein anderes Fahrzeug mit dem Kraftfahrzeug kollidiert. Die Schalt- und/oder Auslöseeinrichtung kann an den Aufprall angepasste Maßnahmen wie das Füllen von Airbags oder Anheben einer Motorhaube selbsttätig bewirken, die das Verletzungsrisiko bzw. einen Unfallschaden verhindern oder erheblich herabsetzen können. Eine besonders schnelle Erfassung der Druckänderungen in den mit einem gasförmigen Medium gefüllten Schlauchinnenräumen durch den Drucksensor erfolgt auf Grund der Schallausbreitung bei einer sternförmigen Verlegung der Schläuche, die dann im wesentlichen jeweils in einer Längsrichtung verlaufen und auf einem kurzen Weg mit dem Drucksensor verbunden sind. Ein anderer, beispielsweise mäanderförmiger Verlauf wenigstens eines verwendeten Schlauches ist jedoch ebenfalls möglich. Die Sensoreinrichtung kann an einer beliebigen Fahrzeugwand vorgesehen sein

## Patentansprüche

1. Sensoreinrichtung für Fahrzeuge, mit einem Sensor in oder an einer Fahrzeugwand, der mit einer Schalt- und/oder Auslöseeinrichtung verbunden ist und einen elastisch verformbaren Schlauch (4, 5, 6, 7) mit einem Schlauchinnenraum aufweist, der direkt oder über ein Schlauchstück (9) an einen Drucksensor (10) angeschlossen ist, der mit der Schalt- und/oder Auslöseeinrichtung in Verbindung steht, die bei einem vorgegebenen Druck-und/oder Druckverlauf im Schlauchinnenraum aktiviert wird, **dadurch gekennzeichnet, dass** der Schlauchinnenraum mit einem gasförmigen Medium gefüllt ist.

2. Sensoreinrichtung nach Anspruch 1, **dadurch gekennzeichnet, dass** der Schlauch (4, 5, 6, 7) nach außen offen ausgebildet ist.

3. Sensoreinrichtung nach Anspruch 1 oder 2, **dadurch gekennzeichnet, dass** der Schlauch (4, 5, 6, 7) hinter einer verformbaren Verkleidung (3) an einer Außenwand (2) des Fahrzeugs (1) angeordnet ist.

4. Sensoreinrichtung nach einem der Ansprüche 1 bis 3, **dadurch gekennzeichnet, dass** die Außenwand durch eine vordere oder hintere Stoßstange (2) eines Kraftfahrzeugs (1) gebildet ist.

5. Sensoreinrichtung nach einem der Ansprüche 1 bis 4, **dadurch gekennzeichnet, dass** die Schlauchinnenräume mehrerer Schläuche (4, 5, 6, 7) an einen gemeinsamen Drucksensor (10) angeschlossen sind.

6. Sensoreinrichtung nach einem der Ansprüche 1 bis 5, **dadurch gekennzeichnet, dass** bei Verwendung mehrerer Schläuche (4, 5, 6, 7) alle oder einige Schläuche (4, 5, 6, 7) etwa parallel verlaufen.

7. Sensoreinrichtung nach Anspruch 5 oder 6,
**dadurch gekennzeichnet, dass** alle oder einige der mehreren Schläuche (4, 5, 6, 7) von einem Verbindungselement (8) in verschiedene Richtungen verlaufen und an das Verbindungselement (8) direkt oder über wenigstens ein Schlauchstück (9) der Drucksensor (10) angeschlossen ist

8. Sensoreinrichtung nach einem der Ansprüche 5 bis 7, **dadurch gekennzeichnet, dass** alle oder einige der mehreren Schläuche (4, 5, 6, 7) eine etwa gleiche Länge aufweisen.

9. Sensoreinrichtung nach einem der Ansprüche 1 bis 8, **dadurch gekennzeichnet, dass** zwischen einer vorderen Verkleidung (3) der vorderen Stoßstange (2) eines Kraftfahrzeugs (1) und einem dahinter angeordneten Schaumblock (12) wenigstens ein Schlauch (4, 5, 6, 7) angeordnet ist, der von einem in Fahrzeugquerrichtung etwa in der Mitte der Stoßstange (2) befindlichen Verbindungselement (8), an das ein Drucksensor (10) angeschlossen ist, etwa horizontal zu einem zugeordneten Seitenbereich der Stoßstange (2) verläuft.

10. Sensoreinrichtung nach Anspruch 9, **dadurch gekennzeichnet, dass** der Drucksensor (10) hinter dem Schaumblock (12) angeordnet und über ein durch den Schaumblock (12) hindurch geführtes oder in einer am Schaumblock ausgebildeten Nut entlang geführtes Schlauchstück (9) mit dem Verbindungselement (8) verbunden ist..

11. Sensoreinrichtung nach einem der Ansprüche 1 bis 10, **dadurch gekennzeichnet, dass** der Schlauch (4, 5, 6, 7) eine solche eher geringe Eigensteifigkeit aufweist, dass er seine vorgesehene Außenform beibehält, wenn der Schlauchinnenraum mit dem Umgebungsluftdruck belastet ist.

## Claims

1. A sensor device for vehicles, comprising a sensor in or on a vehicle wall and connected to a switching and/or triggering device, together with an elastically deformable tube (4, 5, 6, 7) with an interior space connected directly or via a tube portion (9) to a pressure sensor (10) connected to the switching and/or triggering device, which is activated by a set pressure and/or pressure curve in the tube interior, **characterised in that** the tube interior is filled with a gaseous medium.

2. A sensor device according to claim 1, **characterised in that** the tube (4, 5, 6, 7) is open to the exterior.

3. A sensor device according to claim 1 or 2, **characterised in that** the tube (4, 5, 6, 7) is disposed behind a deformable covering (3) on an outer wall (2) of the vehicle (1).

4. A sensor device according to any of claims 1 to 3, **characterised in that** the outer wall is formed by a front or rear bumper (2) of a motor vehicle (1).

5. A sensor device according to any of claims 1 to 4, **characterised in that** the interiors of a number of tubes (4, 5, 6, 7) are connected to a common pressure sensor (10).

6. A sensor device according to any of claims 1 to 5, **characterised in that** when a number of tubes (4, 5, 6, 7) are used, some or all of the tubes (4, 5, 6, 7) run approximately parallel.

7. A sensor device according to claim 5 or 6, **characterised in that** some or all of the tubes (4, 5, 6, 7) extend in different directions from a connecting element (8) and are directly connected to the element (8), or the pressure sensor (10) is connected via at least one tube portion (9).

8. A sensor device according to any of claims 5 to 7, **characterised in that** some or all the tubes (4, 5, 6, 7) are approximately equal in length.

9. A sensor device according to any of claims 1 to 8, **characterised in that** at least one tube (4, 5, 6, 7) is disposed between a front covering (3) on the front bumper (2) of a motor vehicle (1) and a foam block (12) disposed behind it, the tube extending approximately horizontally to an associated side region of the bumper (2), starting from a connecting element (8) situated approximately in the middle of the bumper (2) in the transverse direction of the vehicle and connected to a pressure sensor (10).

10. A sensor device according to claim 9, **characterised in that** the pressure sensor (10) is disposed behind the foam block (12) and connected to the connecting element (8) via a tube portion (9) extending through the foam block (12) or in a groove formed on the foam block.

11. A sensor device according to any of claims 1 to 10, **characterised in that** the tube (4, 5, 6, 7) has a somewhat low intrinsic rigidity such that it retains its intended outer shape when the tube interior is subjected to the ambient air pressure.

## Revendications

1. Dispositif capteur pour véhicules comprenant un capteur dans ou sur une paroi de véhicule, relié à un dispositif de commutation et/ou de déclenchement et qui présente un tuyau flexible (4, 5, 6, 7) déformable élastiquement dont l'intérieur est relié directement ou par un tronçon de tuyau flexible (9) au capteur de pression (10), qui est en communication avec le dispositif de commutation et/ou de déclenchement, activé lors d'une pression et/ou d'une évolution de pression prédéterminée à l'intérieur du tuyau flexible,
**caractérisé en ce que**
l'intérieur du tuyau flexible est rempli d'un fluide gazeux.

2. Dispositif capteur selon la revendication 1,
**caractérisé en ce que**
le tuyau flexible (4, 5, 6, 7) est ouvert vers l'extérieur.

3. Dispositif capteur selon la revendication 1 ou 2,
**caractérisé en ce que**
le tuyau flexible (4, 5, 6, 7) est disposé derrière un habillage (3) déformable sur une paroi extérieure (2) du véhicule (1).

4. Dispositif capteur selon l'une quelconque des revendications 1 à 3,
**caractérisé en ce que**
la paroi extérieure est formée par un pare-chocs (2) avant ou arrière d'un véhicule automobile (1).

5. Dispositif capteur selon l'une quelconque des revendications 1 à 4,
**caractérisé en ce que**
les intérieurs de plusieurs tuyaux flexibles (4, 5, 6, 7) sont raccordés à un capteur de pression (10) commun.

6. Dispositif capteur selon l'une quelconque des revendications 1 à 5,
**caractérisé en ce que**
si l'on utilise plusieurs tuyaux flexibles (4, 5, 6, 7) tous ou quelques uns des uns tuyaux flexibles (4, 5, 6, 7) s'étendent sensiblement en parallèle.

7. Dispositif capteur selon la revendication 5 ou 6,
**caractérisé en ce que**
tous ou quelques-uns des différents tuyaux flexibles (4, 5, 6, 7) s'étendent depuis un élément de liaison (8) dans différentes directions, et le capteur de pression (10) est raccordé directement à l'élément de liaison (8) selon l'une quelconque des revendications 5 à 7,
**caractérisé en ce que**
tous ou quelques-uns des différents tuyaux flexibles (4, 5, 6, 7) présentent une longueur sensiblement identique.

8. Dispositif capteur selon l'une quelconque des revendications 5 à 7,
**caractérisé en ce que**
tous ou quelques-uns des différents tuyaux flexibles (4, 5, 6 ,7) présentent une longueur sensiblement identique.

9. Dispositif capteur selon l'une quelconque des revendications 1 à 8,
**caractérisé en ce qu'**
entre un habillage avant (3) du pare-chocs avant (2) d'un véhicule automobile (1) et un bloc de mousse (12) disposé derrière, au moins un tuyau flexible (4, 5, 6, 7) est prévu, il s'étend à peu près horizontalement depuis un élément de liaison (8) situé dans la direction transversale du véhicule sensiblement au centre du pare-chocs (2) et auquel un capteur de pression (10) est raccordé, vers une zone latérale associée du pare-chocs (2).

10. Dispositif capteur selon la revendication 9,
**caractérisé en ce que**
le capteur de pression (10) est disposé derrière le bloc de mousse (12) et relié à l'élément de liaison (8) par un tronçon de tuyau flexible (9) guidé à travers le bloc de mousse (12) ou le long d'une rainure formée sur celui-ci.

11. Dispositif capteur selon l'une quelconque des revendications 1 à 10,
**caractérisé en ce que**
le tuyau flexible (4, 5, 6, 7) présente une stabilité propre plutôt faible lui permettant de conserver sa forme extérieure prévue lorsque l'intérieur du tuyau flexible est sollicité par la pression de l'air ambiant.
